# EUROPEAN PATENT APPLICATION

(11) **EP 4 765 833 A1**
(43) Date of publication of application: **24.06.2026**
(21) Application number: 24853900.9
(22) Date of filing: 16.08.2024
(51) Int. Cl.: H04N 21/431

(54) **LIVE-STREAMING INTERACTION METHOD AND APPARATUS, AND DEVICE AND STORAGE MEDIUM**

(30) Priority: 16.08.2023 CN 202311036150
(71) Applicant: Beijing Zitiao Network Technology Co., Ltd., Beijing 100190 (CN)
(72) Inventor: LI, Yijie, Beijing 100028 (CN)
(74) Representative: Grünecker Patent- und Rechtsanwälte PartG mbB
(86) International application number: PCT/CN2024/112898
(87) International publication number: WO 2025/036495

(57) **Abstract**

Embodiments of the disclosure relates to a method and a device, an apparatus and a storage medium for live streaming interaction. The method provided by the disclosure includes: displaying a displaying a live streaming interface of a first live streaming room; displaying, in response to a live streaming interaction event at least associated with the first live streaming room and a second live streaming room, an interaction component associated with the live streaming interaction event in the live streaming interface; and adjusting a display style of the interaction component to change prominence of the interaction component in the live streaming interface based on an event process of the live streaming interaction event and/or a predetermined interaction operation associated with the live streaming interaction event in the live streaming room. In view of the above, embodiments of the disclosure can adaptively adjust the display style of the interaction component based on the interaction condition in the live streaming room to enhance the interaction atmosphere and improve the interaction effect of the live streaming room.

## Description

This application claims the benefit of Chinese Patent Application No. 202311036150.3, filed August 16, 2023, entitled "METHOD, APPARATUS, DEVICE AND STORAGE MEDIUM FOR LIVE STREAMING INTERACTION," the entire content of which is incorporated herein by reference.

### FIELD

Example embodiments of the present disclosure generally relate to the field of computers, and in particular, to a method, an apparatus, a device, and a computer readable storage medium for live streaming interaction.

### BACKGROUND

With the development of computer technologies, a live streaming technology that allows people to perform online interaction by using the Internet and a streaming media technology has become increasingly popular, and gradually becomes an interaction manner of mainstream due to the fact that the live streaming technology fuses rich elements such as images, texts and sounds.

In the form of live streaming, a strong live feeling can be created through real, vivid and instant content presentation, and an interaction effect of impressive impression and persistent memory is achieved. In addition, the form of live streaming may allow a user to interact with other users in real time. Therefore, how to provide a better interaction experience for the user is a focus concerned by people.

### SUMMARY

In a first aspect of the present disclosure, a live streaming interaction method is provided. The method includes: displaying a live streaming interface of a first live streaming room; displaying, in response to a live streaming interaction event at least associated with the first live streaming room and a second live streaming room, an interaction component associated with the live streaming interaction event in the live streaming interface; and adjusting a display style of the interaction component to change prominence of the interaction component in the live streaming interface based on an event process of the live streaming interaction event and/or a predetermined interaction operation associated with the live streaming interaction event in the live streaming room.

In a second aspect of the present disclosure, an apparatus for live streaming interaction is provided. The apparatus includes a first display module configured to display a live streaming interface of a first live streaming room; a second display module configured to display, in response to a live streaming interaction event at least associated with the first live streaming room and a second live streaming room, an interaction component associated with the live streaming interaction event in the live streaming interface; and a style adjusting module configured to adjust a display style of the interaction component to change prominence of the interaction component in the live streaming interface based on an event process of the live streaming interaction event and/or a predetermined interaction operation associated with the live streaming interaction event in the live streaming room.

In a third aspect of the present disclosure, an electronic device is provided. The device includes at least one processing unit; and at least one memory coupled to the at least one processing unit and storing instructions for execution by the at least one processing unit. The instructions, when executed by the at least one processing unit, cause the device to perform the method of the first aspect.

In a fourth aspect of the present disclosure, a computer-readable storage medium is provided. The computer-readable storage medium has a computer program stored thereon, and the computer program is executable by the processor to implement the method of the first aspect.

It should be understood that the content described in this content section is not intended to limit the key features or important features of embodiments of the present disclosure, nor is it intended to limit the scope of the present disclosure. Other features of the present disclosure will become readily understood from the following description.

### BRIEF DESCRIPTION OF DRAWINGS

The above and other features, advantages, and aspects of various embodiments of the present disclosure will become more apparent from the following detailed description taken in conjunction with the accompanying drawings. In the drawings, the same or similar reference numbers refer to the same or similar elements, wherein:
FIG. 1 illustrates a schematic diagram of an example environment in which embodiments according to the present disclosure may be implemented;
FIG. 2A to FIG. 2C illustrate example interfaces obtained based on adjustment for an interaction operation according to some embodiments of the present disclosure;
FIG. 3A to FIG. 3B illustrate example interfaces of an "boost" stage according to some embodiments of the present disclosure;
FIG. 4A to FIG. 4C illustrate example interfaces of a "finale stage" according to some embodiments of the present disclosure;
FIG. 5 illustrates an example interface of an interaction component determined based on a topic according to some embodiments of the present disclosure;
FIG. 6 illustrates an example interface of an "overtaking" event according to some embodiments of the present disclosure;
FIG. 7 illustrates an example interface providing an associated "special effect" for an interaction operation according to some embodiments of the present disclosure;
FIG. 8A to FIG. 8B illustrate example interfaces of a target control being triggered according to some embodiments of the present disclosure;
FIG. 9 illustrates a flowchart of an example process of live streaming interaction according to some embodiments of the present disclosure;
FIG. 10 illustrates a schematic structural block diagram of an apparatus for live streaming interaction according to some embodiments of the present disclosure; and
FIG. 11 illustrates a block diagram of an electronic device capable of implementing various embodiments of the present disclosure.

### DETAILED DESCRIPTION

Embodiments of the present disclosure will be described in more detail below with reference to the accompanying drawings. While certain embodiments of the present disclosure are shown in the accompanying drawings, it should be understood that the present disclosure may be implemented in various forms, and should not be construed as limited to the embodiments set forth herein, but rather, these embodiments are provided for a more thorough and complete understanding of the present disclosure. It should be understood that the drawings and embodiments of the present disclosure are for illustrative purposes only and are not intended to limit the scope of the present disclosure.

It should be noted that the title of any section/subsection provided herein is not limiting. Various embodiments are described throughout and any type of embodiments may be included in any section/subsection. Furthermore, the embodiments described in any section/subsection may be combined in any manner with the same section/subsection and/or any other embodiment described in different sections/subsections.

In the description of the embodiments of the present disclosure, the terms "including" and the like should be understood to include "including but not limited to". The term "based on" should be understood as "based at least in part on". The terms "one embodiment" or "the embodiment" should be understood as "at least one embodiment". The term "some embodiments" should be understood as "at least some embodiments". Other explicit and implicit definitions may also be included below. The terms "first," "second," and the like may refer to different or identical objects. Other explicit and implicit definitions may also be included below.

Embodiments of the present disclosure may relate to data of a user, acquisition and/or use of data, and the like. These aspects all follow the corresponding laws and regulations and related regulations. In the embodiments of the present disclosure, all data is collected, obtained, processed, processed, forwarded, used, etc., all of which are performed on the premise that the user knows and confirms. Accordingly, when implementing the embodiments of the present disclosure, the types of the data or information that may be involved, the usage scope, the usage scenario, and the like should be notified to the user and obtain the authorization of the user in an appropriate manner according to the relevant laws and regulations. The specific notification and/or authorization manner may vary according to actual situations and application scenarios, and the scope of the present disclosure is not limited in this respect.

According to the solutions in the present specification and the embodiments, for example, personal information processing is involved, processing may be performed on the premise of having a legality basis (for example, obtaining consent of a personal information subject, or necessary for performing a fulfillment contract), and processing only within a specified or agreed range. The user rejects personal information other than necessary information required by the basic function, and does not affect the basic function of the user.

As mentioned briefly above, in the form of live streaming, a strong live feeling can be created through real vivid propagation, and an propagation effect of impressive impression and persistent memory is achieved. In addition, the form of live streaming may allow users to interact in real time.

In a related solution, in order to improve the experience of interaction and viewing, live streaming content is enriched. Providers (or streamers) of the live streaming content may be linked in live streaming. For example, the streamers may interact with each other by connecting the content of the live streaming room to provide richer live streaming content for viewers. However, in these solutions, the live streaming effect of the live streaming room still relies entirely on the interaction operation of the streamer, and there is a problem that the interaction atmosphere is not strong and the viewing experience of the user is poor.

Embodiments of the invention provides a solution for live streaming interaction. According to the solution, a live streaming interface of a first live streaming room is displayed; and in response to a live streaming interaction event at least associated with the first live streaming room and a second live streaming room, an interaction component associated with the live streaming interaction event is displayed in the live streaming interface; and a display style of the interaction component is adjusted to change prominence of the interaction component in the live streaming interface based on the event process of the live streaming interaction event and/or a predetermined interaction operation associated with the live streaming interaction event in the live streaming room.

In this way, embodiments of the present disclosure can adaptively adjust the display style of the interaction component based on the interaction condition in the live streaming room to enhance the interaction atmosphere and improve the interaction effect of the live streaming room.

Various example implementations of this solution are described in detail below in conjunction with the accompanying drawings.

### Example Environment

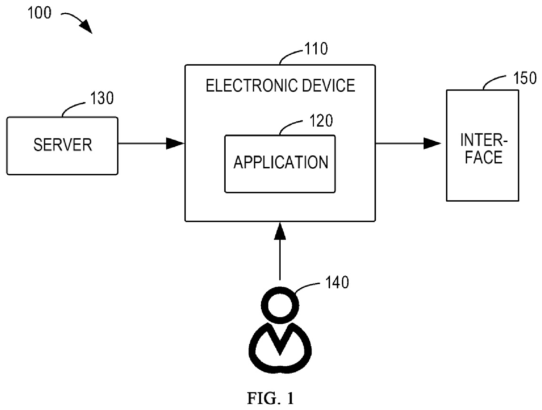

FIG. 1 illustrates a schematic diagram of an example environment 100 in which embodiments of the present disclosure can be implemented. As shown in FIG. 1, the example environment 100 may include an electronic device 110.

In the example environment 100, the electronic device 110 may run an application 120 for providing and viewing a live streaming. The application 120 may be any suitable type of application for providing and viewing live streaming, examples of which may include, but are not limited to: online video applications, live streaming applications. The user 140 may interact with the application 120 via the electronic device 110 and/or its attached device. The user 140 may, for example, a user viewing a live streaming (or viewer).

In the environment 100 of FIG. 1, if the application 120 is active, the electronic device 110 may present a live streaming interface 150 through the application 120.

In some embodiments, the electronic device 110 communicates with the server 130 to enable provisioning of services to the application 120. The electronic device 110 may be any type of mobile terminal, fixed terminal, or portable terminal, including a mobile phone, a desktop computer, a laptop computer, a notebook computer, a netbook computer, a tablet computer, a media computer, a multimedia tablet, a palmtop computer, a portable game terminal, a VR/AR device, a personal communication system (PCS) device, a personal navigation device, a personal digital assistant (PDA), an audio/video player, a digital camera/camcorder, a positioning device, a television receiver, a radio streamer receiver, an electronic book device, a gaming device, or any combination of the foregoing, including accessories and peripherals of these devices, or any combination thereof. In some embodiments, the electronic device 110 can also support any type of interface for a user (such as a "wearable" circuit, etc.).

The server 130 may be a standalone physical server, a server cluster composed of multiple physical servers, or a distributed system, or may be a cloud server that provides basic cloud computing services such as cloud services, cloud databases, cloud computing, cloud functions, cloud storage, network services, cloud communications, middleware services, domain name services, security services, content distribution networks, and big data and artificial intelligence platforms. The server 130 may include, for example, a computing system/server, such as a mainframe, an edge computing node, a computing device in a cloud environment, or the like. The server 130 may provide background services for applications 120 that support virtual scenes in the electronic device 110.

A communication connection may be established between the server 130 and the electronic device 110. The communication connection may be established in a wired manner or a wireless manner. The communication connection may include, but is not limited to, a Bluetooth connection, a mobile network connection, a Universal Serial Bus (USB) connection, a Wireless Fidelity (WiFi) connection, and the like, and the embodiments of the present disclosure are not limited in this aspect. In an embodiment of the present disclosure, the server 130 and the electronic device 110 may implement signaling interaction through a communication connection between the server 130 and the electronic device 110.

It should be understood that the structures and functions of the various elements in the environment 100 are described for illustrative purposes only and do not imply any limitation to the scope of the present disclosure.

Some example embodiments of the present disclosure will be described below with continued reference to the accompanying drawings.

### Example Live streaming interaction

The electronic device 110 may be a live streaming interface of a live streaming room of a user 140. For example, the electronic device 110 may provide the live streaming interface of a first live streaming room for the electronic device 110 according to the first live streaming room selected by the user 140. The user 140 may obtain, through the live streaming interface, live streaming content provided by an streamer related to the first live streaming room. Further, the streamer of the first live streaming room may establish and implement interaction of "cross-live streaming room" by, for example, inviting the streamer of another live streaming room (for example, a second live streaming room). For example, when an streamer establishes an interaction cross the live streaming room with another streamer, the live streaming interface viewed by the user 140 may simultaneously present the live streaming content of the first live streaming room and the live streaming content of the second live streaming room. In such a state, the streamer and the viewer in the first live streaming room may interact with the streamer and the viewer in the second live streaming room to enrich the interaction experience.

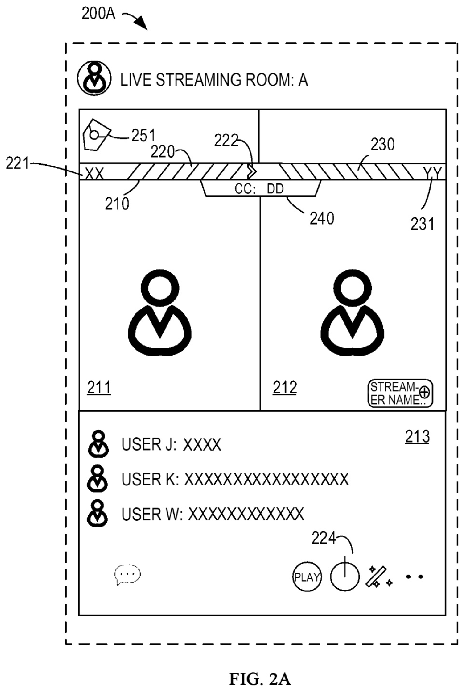

For convenience, FIG. 2A may be referenced, FIG. 2A illustrates an example interface 200A of some embodiments of the present disclosure. After the association relationship is established between the first live streaming room and the second live streaming room, the interface 200A may be provided to the user 140. In the interface 200A, an area 211 may present the live streaming content in the first live streaming room, and an area 212 may present the live streaming content in the second live streaming room. In this way, the electronic device 110 may simultaneously provide the live streaming content in two live streaming rooms for the user 140. Further, the electronic device 110 may provide an interaction area 213 in the live streaming interface (e.g., the interface 200A). The user 140 may use the interaction area 213 to interact with the live streaming room. For example, text communication may be performed with other users in the live streaming room. Generally, the interaction area 213 corresponds to a live streaming room selected and entered by the user 140. For example, when the user 140 selects the first live streaming room, the text content presented in the interaction area 213 is sent by other users entering the first live streaming room. The electronic device 110 may further provide a set of controls 224 in the interaction area 213, and the user 140 may complete, for example, sending an expression and gifting an item to the streamer through each control in the set of controls 224.

In an embodiment of the present disclosure, after the first live streaming room and the second live streaming room are at least associated, the electronic device 110 may display, in the live streaming interface, an interaction component associated with a live streaming interaction event for the live streaming interaction event at least associated with the first live streaming room and the second live streaming room. For example, the electronic device 110 may add an interaction component 210 in the interface 200A.

The live streaming interaction event may be an interaction event associated with a plurality of live streaming rooms. For ease of description, an example is described herein with reference to a scenario in which the first live streaming room and the second live streaming room are associated. It should be understood that this is merely an illustrative description, and is not intended to limit this. In some scenarios, the first live streaming room, the second live streaming room, and a third live streaming room may be associated, or more live streaming rooms may be associated, for example, according to requirements.

In some embodiments, the live streaming interaction event may be a competitive interaction event indicating that different live streaming rooms correspond to different interaction targets. For example, the competitive interaction event may include competitive interaction (in some scenarios, also referred to as PK) of the first live streaming room and the second live streaming room based on a certain standard and within a time period, and after the competitive interaction is completed, the winning live streaming room is determined based on the interaction result (for example, the interaction value such as a value of obtained points of the competition) of each live streaming room, and the reward is performed.

In some embodiments, the live streaming interaction event may also be a collaborative interaction event indicating that different live streaming rooms correspond to the same interaction target. For example, the collaborative interaction event may include interaction between the first live streaming room and the second live streaming room to jointly complete one target (for example, a value of points of the first live streaming room and the second live streaming room satisfies a target value of points). Therefore, by configuring the live streaming interaction events with different properties, the interaction form cross the live streaming room can be enriched. In some embodiments, the live streaming interaction event may be a voting interaction event to instruct the viewer to select and complete a vote for a voting option initiated by the streamer. For the first live streaming room, the corresponding interaction value may be referred to as a first interaction value, which may be determined based on an interaction operation in the first live streaming room. Similarly, for the second live streaming room, the corresponding interaction value may be referred to as a second interaction value, which may be determined based on an interaction operation in the second live streaming room. For example, obtaining the points of the competition is taken as an example, the first interaction value may be, for example, a total value of the points accumulated by items provided by a set of users in the first live streaming room. The second interaction value may be, for example, a total value of the points accumulated by items provided by another set of users in the second live streaming room.

In some embodiments, the streamer of the first live streaming room may establish interaction of "cross-live streaming room" with another live streaming room by, for example, inviting other one or more live streaming rooms (for example, the second live streaming room). For example, when the streamer establishes an interaction cross the live streaming room with another streamer, the live streaming interface viewed by the user 140 may simultaneously present the live streaming content of the first live streaming room and the live streaming content of the second live streaming room. In such a state, the streamer and the viewer in the first live streaming room may interact with the streamer and the viewer in the second live streaming room to enrich the interaction experience.

If the live streaming interaction event is at least associated with the first live streaming room and the second live streaming room, the electronic device 110 may respond to this and display the interaction component associated with the live streaming interaction event in the live streaming interface. For example, in interface 200A, the electronic device 110 may display the interaction component 210.

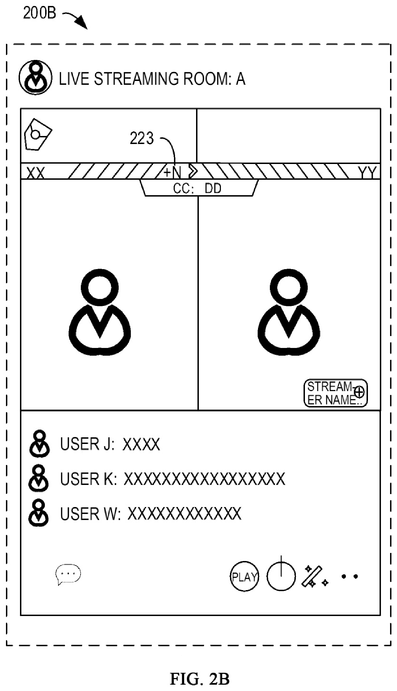

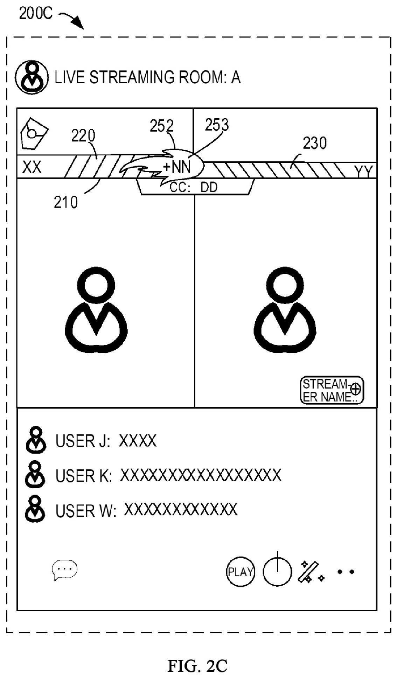

The interaction component 210 may feed back an interaction situation of each live streaming room with respect to the live streaming interaction event. In some embodiments, interaction between the first live streaming room and the second live streaming room is taken as an example, the interaction component 210 may include a control indicating an interaction degree of a single or multiple live streaming rooms, and the interaction degree may be correspondingly accumulated based on the interaction operation occurring in the live streaming room within a predetermined time period. A progress bar is taken as an example of the progress control, the length value of the progress bar may indicate, for example, the interaction degree or the interaction value of the live streaming room. A such control is also referred to as a progress control. As shown in FIG. 2, the interaction component 210 may include, for example, a progress control 220 and a progress control 230 (which may also be collectively referred to as a progress control). The electronic device 110 may use the progress control 220 and the progress control 230 to feed back the interaction situation of the live streaming room. For example, in the competitive interaction event, if the obtainance situation for the value of the points of the first live streaming room and the second live streaming room after the preset duration is compared, the interaction component 210 may feed back the value of the points obtained by the first live streaming room through the progress control 220, and feed back the value of the points obtained by the first live streaming room through the progress control 230. In some embodiments, the interaction component 210 may determine the display area respectively corresponding to the progress control 220 and the progress control 230 by comparing an ratio relationship between the obtained value of the points (for example, the entire display length of the interaction component 210 is divided based on the ratio relationship), such that the interaction situation between the first live streaming room and the second live streaming room is fed back.

Further, the electronic device 110 may adjust a display style of the interaction component 210 to change prominence of the interaction component in the live streaming interface based on an event process of the live streaming interaction event and/or a predetermined interaction operation associated with the live streaming interaction event in the live streaming room. In some embodiments, the predetermined interaction operation may be associated with the live streaming interaction event, or in other words, interaction operations related to pushing and implementing the live streaming interaction event. For example, when the live streaming interaction event indicates that the target value of the points needs to be accumulated in the live streaming room, the predetermined interaction operation may be a behavior able to provide an value of the points for the live streaming room.

In some embodiments, the electronic device 110 may achieve the adjustment for the display style of the interaction component 210 by adjusting the first display parameter of at least part of the progress control 220 and/or the progress control 230. The first display parameter includes a length of the progress control 210 and/or the progress control 220 in a predetermined direction of the live streaming interface, for example, a display height. Such a predetermined direction may include a vertical direction or a horizontal direction, which is different from the direction indicating the progress of the progress control. FIG. 2 is taken as an example, the length of the progress control 220 in the horizontal direction indicates the progress of the progress control, and the vertical direction may be used as the predetermined direction for adjusting the progress control 220. For example, adjusting the length of the progress control 210 in the predetermined direction may include adjusting the display height of the interaction component (e.g., a PK/battle component, a PK bar, etc.). Accordingly, the change of the display height may cause the interaction component 210 to change correspondingly in the interface.

In this way, the purpose for highlighting the interaction component 210 can be obtained by the change of the visual style of the progress control 220 and/or the progress control 230. Alternatively or additionally, the electronic device 110 may further achieve the purpose of highlighting by adjusting the brightness, the color and the like of the progress control 210 and/or the progress control 220. In addition, the trigger occasion or the trigger policy of the progress control 220 and/or the progress control 230 may be determined according to the interaction situation in the live streaming room respectively corresponding to the progress control 220 and the progress control 230, which will be described in detail subsequently.

In an embodiment of the present disclosure, the electronic device 110 may further provide auxiliary information associated with the live streaming interaction event in the live streaming interface to present the situation of the live streaming interaction event. For example, the remaining time in the live streaming interaction event and so on.

For ease of understanding, comparison of the obtainance situation for the value of the points of the first live streaming room and the second live streaming room after the preset duration is taken as an example of the live streaming interaction event. In this case, the live streaming room may determine the value of the points corresponding to the live streaming room based on the number of items submitted by the viewer and the value of the points corresponding to the items. For example, for the first live streaming room, the user 140 may obtain the "value of the points" in the first live streaming room by presenting the items. In some scenarios, the operation of the user 140 presenting an item may also be described as "presenting a gift", and the competitive interaction event may also be referred to as "PK". Correspondingly, "presenting a gift" may also be understood as an interaction operation in the live streaming interaction event. The user 140 may participate in the "live streaming interaction event" based on the interaction operation.

For example, FIG. 2A may be referred to continuously. The interface 200A may further present indication information 221 indicating the value of the points that has been obtained by the first live streaming room, that is, the indication information 221 may indicate the above first interaction value. The interface 200A may further present indication information 231 indicating the value of the points that has been obtained by the first live streaming room, that is, the indication information 231 may indicate the above second interaction value.

In the interface 200A, an indication element 222 may also be utilized to distinguish a boundary of the progress control 220 and the progress control 230. In some embodiments, if the live streaming interaction event is constrained by the time (for example, within a duration of CC: DD, the total value of the points obtained by the live streaming room is compared), for example, the interface 200A may also present indication information 240, and the indication information 240 may be used to indicate the remaining time.

In some embodiments, the electronic device 110 may further display contribution degree information corresponding to the predetermined interaction operation in the interaction component. The contribution degree information indicates a contribution degree of the predetermined interaction operation to the live streaming interaction event. For example, in accordance with that the predetermined interaction operation is providing the value of the points, the contribution degree information may indicate an increase in the value of the points that can be brought by the predetermined interaction operation.

For example, FIG. 2B may be referred to. FIG. 2B illustrates an example interface 200B of some embodiments of the present disclosure. In an interface 200B, after presenting the gift to the first live streaming room, for example, by the user of the user 140, the electronic device 110 may generate the contribution degree information 223 based on the value of the points (for example, N) corresponding to the gift. By presenting the contribution degree information 223, the electronic device 110 may transmit, to the user 140, at least the effect that can be generated by the interaction operation (for example, the effect of causing the value of the points corresponding to the first live streaming room to be increased by N), or the contribution made by the interaction operation to the first live streaming room. In the interface 200B, the electronic device 110 may also present contribution degree information 223 indicating the newly obtained value of the points in the first live streaming room, for example, due to the operation of the user 140 presenting the gift.

Therefore, the viewers may change the value of the points corresponding to the live streaming room by, for example, presenting the gift, so as to achieve interaction and complete the live streaming interaction event.

The following describes the manner and effect of adjusting the display style of the interaction component based on the predetermined interaction operation and/or the event process, respectively.

### Style adjustment based on interaction operation

For ease of understanding, the competitive interaction event of comparing the obtainance situation for the value of the points of the first live streaming room and the second live streaming room after the preset duration is also taken as the live streaming interaction event for example in the following.

In some embodiments, for the interaction operation, it may produce different effects due to, for example, the occasion of presenting the gift, the value of the gift being presented, etc. In order to better distinguish the interaction operation, some interaction operations may be determined as the predetermined interaction operations, for example, based on the trigger occasion, the generated effect, and the like.

In some embodiments, the predetermined interaction operation may be a first type of interaction operation. The first type of interaction operation corresponds to the interaction operation for the first time associated with the live streaming interaction event in the first live streaming room or the second live streaming room. For example, for the first live streaming room, the first type of interaction operation may be an operation in which the first live streaming room receives the gift for the first time after the "PK" is started.

In some embodiments, the electronic device 110 may adjust the display style of the interaction component in response to a predetermined interaction operation performed by the user for the live streaming room. For example, after "starting PK", the user 140 presents a gift to the first live streaming room, and when the gift is the first received gift in the live streaming room, the electronic device 110 may adjust the height of the progress control 210 corresponding to the first live streaming room to achieve the purpose of adjusting the display style of the interaction component 210.

For example, the interface 200C in FIG. 2C may be referred to, the electronic device 110 may adjust the length of the progress control 220 in the vertical direction, so that the visual style of the progress control 220 is "getting higher" visually to highlight the visual style of the progress control 220.

In some embodiments, the predetermined interaction operation may be a second type of interaction operation. The second type of interaction operation corresponds to an interaction operation with a contribution degree for the live streaming interaction event greater than a first threshold in the first live streaming room or the second live streaming room. In general, the contribution degree may be associated with the effect that the interaction operation can produce. For example, in the above scenario, the contribution degree may be associated with the value of the points corresponding to the "gift". For example, a different gift may be correspondingly associated with the value of the points, and an operation of presenting a gift exceeding the first threshold (e.g., the value threshold of the points) by the user 140 may be determined as the second type of interaction operation.

In some embodiments, the electronic device 110 may further be associated with the interaction component 210 to display a dynamic effect corresponding to the predetermined interaction operation. With continued reference to FIG. 2C, in accordance with the presence of the predetermined interaction operation (e.g., the second type of interaction operation), the electronic device 110 may also display a dynamic effect (e.g., an effect element 252) in association with the interaction component 210. In some embodiments, the effect element 252 may also include contribution degree information 253 to indicate an effect that can be brought by the predetermined interaction operation. Therefore, the situation where the predetermined interaction operation occurs is fed back more vividly by using the dynamic effect.

In some embodiments, the predetermined interaction operation may be a third type of interaction operation. The third type of interaction operation corresponds to a plurality of interaction operations associated with the same user within a first time period in the first live streaming room or the second live streaming room. For example, for the first live streaming room, the operation of the user 140 continuously presenting the gift for the first time period (e.g., the operation of presenting gifts exceeds a required number of gifts) may be determined as the third type of interaction operation. In some embodiments, the time length of the first time period may be independently determined, or may be determined based on the time associated with the live streaming interaction. In some embodiments, in order to facilitate the user 140 to implement, for example, an action of presenting the gift, the electronic device 110 may further be configured with a target control, so that the user 140 interacts with the target control to achieve the purpose of presenting the gift continuously. In this case, the adjustment for the live streaming interface by the electronic device 110 may refer to the description of the description of "interaction with the target control".

In some embodiments, the predetermined interaction operation may be a fourth type of interaction operation. The fourth type of interaction operation corresponds to an aggregation of a plurality of interaction operations within a second time period in the first live streaming room or the second live streaming room, and a sum of contribution degrees of the plurality of interaction operations for the live streaming interaction event is greater than a second threshold. For example, for the first live streaming room, the sum of the value of the points corresponding to the gifts jointly presented by multiple different users within the second time period is greater than the second threshold. In this case, it may be considered that the operation of the jointly presenting gifts by the multiple users belongs to the fourth type of interaction operation. In this way, some special operations, for example, the operation may be motivated, or the operation distinguished from ordinary and more common interaction operations, may be distinguished through the preset interaction operation. Therefore, in accordance with that these predetermined interaction operations may be present, the display style of the interaction component 110 is selected to be adjusted to prompt, feed back and motivate these predetermined interaction operations, such that the interaction atmosphere of the live streaming room is enhanced.

In some embodiments, the electronic device 110 may also configure the display duration, such as the first duration, for the adjusted display style. After the first duration, the electronic device 110 may configure to adjust the display style of the interaction component 210 back to, for example, the style shown in the interface 200A. Therefore, the live streaming room atmosphere can be adjusted by adjusting the visual display style, and prompting and motivating the presence of the predetermined interaction operation.

In some embodiments, the electronic device 110 may further select whether to add the dynamic effect and the specific style of the dynamic effect based on the type of the predetermined interaction operation. For example, the electronic device 110 may configure to add the dynamic effect of the style for only the second type of interaction operation. Generally, the position of the effect element may be determined within a preset range of the junction position of the progress control 220 and the progress control 230 based on the live streaming room to which the effect element belongs.

In some embodiments, the electronic device 110 may further display, in the interaction component 210, identification information of at least one user associated with the predetermined interaction operation. For example, the electronic device 110 may display, in the interaction component 210, identification information of at least one user associated with a predetermined interaction operation (for example, a user avatar, a nickname, and the like of the user). For example, when the user 140 presents the gift to the first live streaming room, the electronic device 110 may add the user avatar of the user 140, e.g., in the effect element 252, to identify that the current contribution is made by the user 140. Therefore, the interaction and contribution operation of the user can be prompted in the manner of presenting the user identification, so that the user can be motivated and awarded, and the interaction experience is improved.

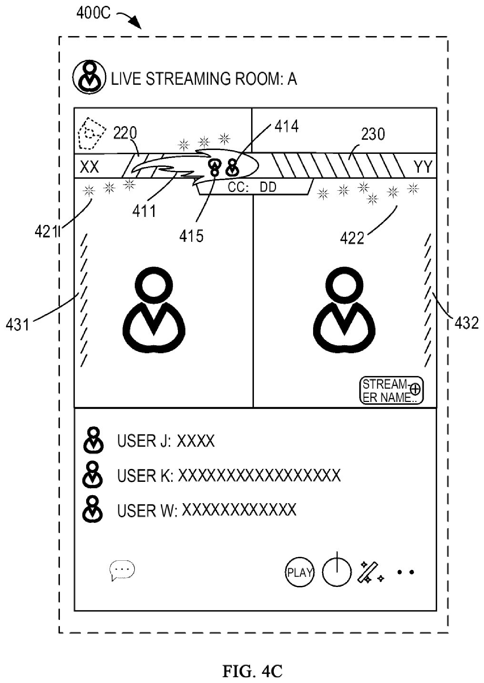

In some embodiments, the predetermined interaction operation may be associated with a plurality of users. For example, the gifts are given to the live streaming room by the plurality of users (for example, the plurality of users are continuously giving gifts within a preset time period), and in this way, the electronic device 110 may further display, in the interaction component 210, identification information of a set of users in the plurality of users. For example, FIG. 4C may be firstly referred to, FIG. 4C illustrates an example interface 400C of some embodiments of the present disclosure. In the interface 400C, the electronic device 110 may also present identification information 415. The identification information 415 may include an image identification (e.g., an avatar) and/or text representation (e.g., a user name or a nickname, etc.) of the user.

In some embodiments, the constraint may also be set for the data of the user that can be presented in the identification information 415, for example, the number of the set of users does not exceed the preset number. Therefore, the number of users that can be associated in the identification information 415 can be controlled to ensure that the relevant information of the users can be completely presented, thereby the presentation effect can be ensured. For example, there may be no more than 2 total number of users in a set of users. In some embodiments, in accordance with that the number exceeds the constraint, the electronic device 110 may update the user in the set of users (or update the old user based on the new user). For example, in accordance with that a set of users includes a user A and a user B, if the total number of users in the set of users is not more than 2, in accordance with that there is a user C, at least one of the user A and the user B may be replaced with the user C, and the identification information of the user C may be displayed. Generally, the user to be updated may be selected based on a time sequence of the predetermined interaction operation, a contribution degree corresponding to the predetermined interaction operation, and the like. For example, when the identification information of the user A is presented earlier, the user A may be replaced with the user C, and the identification information of the user C may be displayed. Therefore, the identification information can be dynamically updated with the live streaming, so that the identification information corresponds to the progress of the live streaming.

Therefore, the electronic device 110 may adjust the display style of the interaction component 210 based on the interaction operation of the live streaming room, so that the interaction component 210 corresponds to the interaction operation of the user 140, so as to highlight the interaction operation and enhance the atmosphere of the live streaming room. In some embodiments, the live streaming interaction event may also be performed in nodes, for example, multiple event nodes may be determined from a complete "collaborative interaction event". For example, when the total value of the points accumulated in the two live streaming rooms satisfies the requirement of the current node, the interaction between the current node and the next node is started. Therefore, the "target" can be configured for the live streaming interaction event more finely by dividing the nodes. In this way, the electronic device 110 may also respond when the live streaming interaction event is performed to the predetermined event node, so that the display style of the interaction component 210 may be adjusted (for example, the height of the progress control 220 and the height of the progress control 230 may be adjusted simultaneously ), to prompt and feed back the situation that the "node" is reached. Correspondingly, the electronic device 110 may also set the corresponding duration (for example, the second duration), and cause the adjusted display style to last for the second duration. Therefore, the situation of reaching the "node" can be transmitted to the user by the manner of changing the display style of the interaction component 210, so that the user can be motivated and assisted to better realize the interaction. In some embodiments, the event node may also be determined based on the duration that has interacted, for example, an interaction duration between each event node and the previous one event node is 5 minutes.

### Style Adjustment Based On Event Process

In some embodiments, the electronic device 110 may divide the live streaming interaction event into multiple stages to configure the presentation policy in stages to fit the live streaming interaction process.

In some examples, the live streaming interaction event may include a first stage that indicates that a specific interaction operation within the live streaming room will produce additional contribution degree to the live streaming interaction event. In some scenarios, the first stage may also be referred to as an "boost stage".

In another example, the live streaming interaction event may include a second stage, and the second stage indicates that a remaining duration of the live streaming interaction event is less than a threshold. In some scenarios, the second stage may also be referred to as a "finale stage".

It should be understood that the live streaming interaction event may be divided into multiple stages according to other suitable division rules.

Examples of style adjustments will be described below in conjunction with the "boost stage" and the "finale stage".

### "Boost stage"

In some embodiments, as introduced above, the live streaming interaction event may include a first stage. The first stage may be a special stage relative to a normal stage, such as in the first stage (or when the first stage is initiated), the same predetermined interaction operation of the user 140 may provide more contribution. The first stage indicates that a specific interaction operation within the live streaming room will produce additional contribution to the live streaming interaction event. For example, for the same gift, the value of the points contributed by the user 140 in the normal stage may be 50. In the first stage, when the gift is presented by the user 140, on the basis of the original value 50 of the points, it may additionally contribute, for example, 5 points, that is, in the first stage, the gift of the value 50 of the points presented by the user 140 may actually contribute the value 55 of the points to the first live streaming room. In some embodiments, a specific interaction operation may be part of a predetermined interaction operation, e.g., giving a gift-A and giving a gift-B may be considered as the specific interaction operation, and giving a gift-C is not considered as a specific interaction operation. In this way, the user 140 can be motivated to participate in the interaction intensively by the manner of setting the first stage, thereby the interaction aggressiveness of the user 140 may be improved. In some embodiments, the trigger time of the first stage may be, for example, selected by the streamer, or preconfigured by a provider of the live streaming room (for example, a live streaming platform).

The electronic device 110 may adjust, in response to the live streaming interaction event proceeding to the first stage, the display style of the interaction component 210 until the first stage ends.

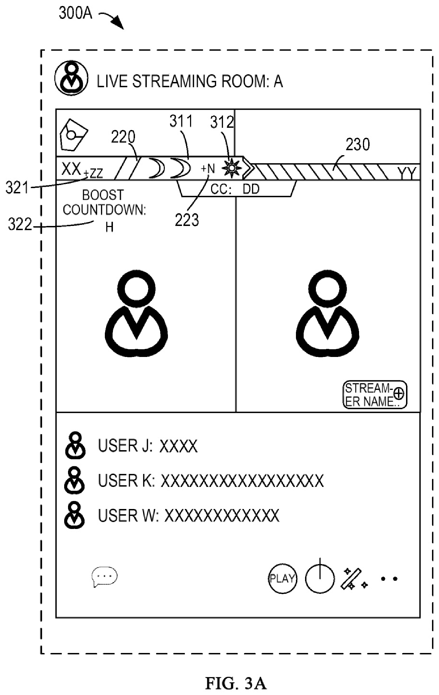

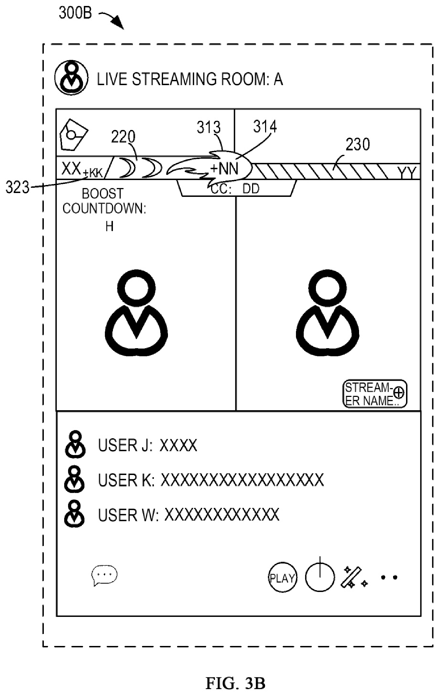

For ease of understanding, FIG. 3A and FIG. 3B may be referred to at the same time. FIG. 3A illustrates an example interface 300A of some embodiments of the present disclosure. FIG. 3B illustrates an example interface 300B of some embodiments of the present disclosure.

Referring to FIG. 3A, in the interface 300A, if the live streaming interaction event proceeds to the first stage, the electronic device 110 may change the display style of the interaction component 210 by adjusting the height of the progress control 220.

In some embodiments, the first stage may also be correspondingly configured with an initiated duration, whereby the viewer is further encouraged to participate in the interaction by the manner of limiting the initiated duration. In some embodiments, the electronic device 110 may further provide the first remaining duration of the first stage in the live streaming interface in the live streaming interface. Thus, it is convenient for the user 140 to understand that the first time period is "time-limited", and it is convenient for the user to understand the remaining time of the first time period.

For example, the interface 300A further includes indication information 322, and the indication information 322 may present a remaining time of the first time period.

In some embodiments, the electronic device 110 may further display the contribution degree information 223 and the contribution degree information 321 by using the interaction component 210 in response to a first interaction operation in the first live streaming room or in the second live streaming room (for example, a predetermined interaction operation of the user 140 in the first live streaming room). The contribution degree information 223 may indicate a preset contribution degree corresponding to the first interaction operation, for example, a basic value of the points contributed by giving the gift (e.g., 50 points in the above example). The contribution degree information 321 may indicate the additional contribution degree corresponding to the first interaction operation, e.g., an additional value of the points (e.g., 5 points in the above example) that is additionally contributed by giving a gift in the first stage. Thus, the user 140 can understand that the contribution produced by the interaction operation is composed of two parts, and the actual contribution that can be produced by each part.

In some embodiments, the electronic device 110 may further cause a dynamic effect to be presented in a part of the target live streaming room that corresponds to the interaction component 210. For example, for the first interaction operation of the user 140 in the first live streaming room, the electronic device 110 may also correspondingly present the dynamic effect in the corresponding part in the first live streaming room to indicate that the first interaction operation occurs in the target live streaming room.

For example, FIG. 3A may be referred to. In the interface 300, if the user 140 interacts with the first live streaming room based on the first interaction operation, the electronic device 110 presents the effect element 311 in the part of the first live streaming room (for example, the part of the progress control 220) that corresponds to the interaction component 210, to indicate that the first interaction operation occurs in the first live streaming room. In some embodiments, the electronic device 110 may further present the effect element 312 to more clearly indicate that the first interaction operation has occurred in the first live streaming room. It should be understood that the effect element 311 and the effect element 312 may be used singly or in combination, and the present disclosure is not intended to be limited thereto.

In some embodiments, the electronic device 110 may also similarly feed back the contribution made by the user 140 through the effect element. For example, FIG. 3B is referred to. In the interface 300B, the electronic device 110 may also present a effect element 313. Similarly, the effect element 313 may also include contribution degree information 314 to indicate the contribution degree (e.g., NN) that can be provided by the first interaction operation of the user 140.

Therefore, when the interaction aggressiveness of the user can be improved by configuring the "boost stage", the electronic device 110 can correspondingly configure the display effect to enhance the live streaming atmosphere for the "boost stage".

### "Finale Stage"

In some embodiments, as introduced above, the live streaming interaction event may include a second stage that indicates that the remaining duration of the live streaming interaction event is less than a threshold. Generally, the second stage may be the last stage before the live streaming interaction event is ended (also referred to as the finale stage), or the time covered by the second stage is a time period before the end of the live streaming interaction event. Generally, the length of this time period may be selected by the streamer, for example, or the threshold may be preconfigured by the provider of the live streaming room (for example, the live streaming platform). In accordance with that the remaining duration of the live streaming interaction event is less than the threshold, the electronic device 110 may determine that the live streaming interaction event enters the second stage. In some scenarios, the second stage may also be referred to as an end stage of the live streaming interaction event.

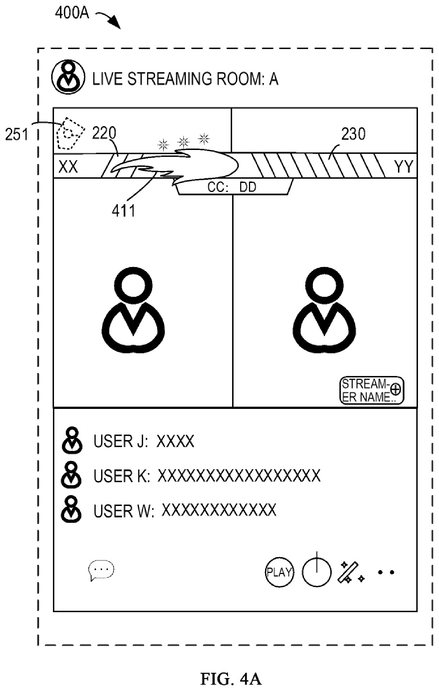

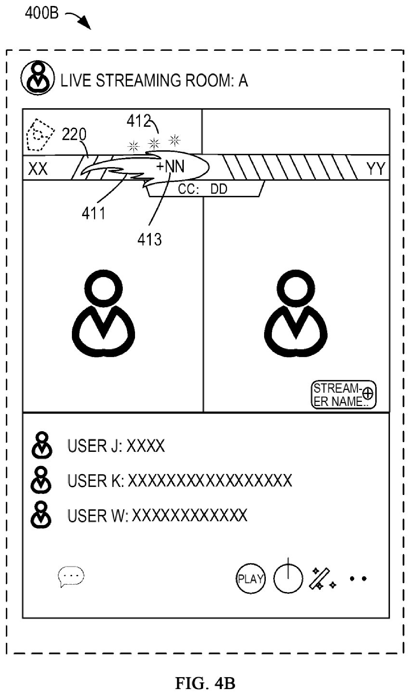

For ease of understanding, FIG. 4A to FIG. 4C may be referred to at the same time. FIG. 4A illustrates an example interface 400A of some embodiments of the present disclosure. FIG. 4B illustrates an example interface 400B of some embodiments of the present disclosure.

After determining that the live streaming interaction event enters the second stage, the electronic device 110 may adjust the display style of the interaction component 210 until the second stage ends. For example, the electronic device 110 may simultaneously adjust the display style of the progress control 220 and the progress control 230. For example, the display height of the progress control 220 and the progress control 230 are adjusted simultaneously. In this way, the user 140 can understand that the live streaming interaction event enters the second stage, or enters the finale through the display style of the interaction component 210 (for example, the user 140 can understand that the live streaming interaction event enters the second stage and enters the finale by observing that the progress control 220 and the progress control 230 are both higher). Thus, the progress status of the live streaming interaction event is provided for the user 140 through the style of the interaction component 210, so that the user 140 makes a decision better. In some embodiments, after completing the adjustment of the display style of the interaction component 210, the electronic device 110 may maintain the adjusted display style to the end of the second stage to continuously enhance the interaction atmosphere of "entering the finale".

In some embodiments, in order to provide services to the user 140 (e.g., provide a reward resource), the electronic device 110 may also provide multiple service controls. For example, in the interface 200A, the electronic device 110 may provide a service control 251. The user 140 may obtain a corresponding service (e.g., obtain the reward resource) by triggering (e.g., clicking on) the service control 251. For an interface element such as the service control 251, if the electronic device 110 determines that the live streaming interaction event is performed in the second stage, the prominence of the interface element may be reduced.

In some embodiments, if the live streaming interaction event is performed to the second stage, the electronic device 110 may process, based on the position of the interface element and the interaction component 210, an interface element that falls within a distance range (for example, within a preset distance range) of the interaction component 210, or at least one interface element that is positionally adjacent to the position of the interaction component 210. For example, the prominence of these interface elements may be reduced (e.g., turning down brightness, adjusting transparency), etc. In this way, the electronic device 110 may more "significantly" present the interaction component 210 to enhance the interaction atmosphere of "entering the finale".

For example, FIG. 4A may be referred to. In the interface 400A, for the interface element (e.g., the service control 251) of the electronic device 110 for the interaction component 210, the electronic device 110 can reduce the prominence of the interface element by adjusting the transparency thereof.

In some embodiments, if the live streaming interaction event is performed to the second stage, the electronic device 110 may further display, in a target part (for example, the progress control 220) of the first live streaming room that corresponds to the interaction component 210, an indicator having a target style (for example, a style corresponding to the foregoing dynamic effect), to indicate that the current live streaming interaction event is more clearly indicated to be performed to the second stage.

For example, FIG. 4A may be referred to. In the interface 400A, the electronic device 110 may present the effect element 414 as an indicator in progress control 220.

In some embodiments, after presenting the indicator (e.g., the effect element 414), for example, if the user 140 gives a gift, the electronic device 110 may add the contribution degree information in the effect element 414 to indicate it.

For example, FIG. 4B may be referred to. In the interface 400B, if the user 140 gives a gift, the electronic device 110 may present the contribution degree information 413 in the effect element 414. In some embodiments, in order to enhance the presentation effect, the electronic device 110 may further increase the effect element 412 to more clearly indicate the current live streaming interaction event to proceed to the second stage.

In some embodiments, if the live streaming interaction event is performed in the second stage, the electronic device 110 may further apply the target display effect to the live streaming area. For example, the target display effect may be at least one of a set of preset display effects. The target display effect may be, for example, a breathing light, a flashing light band, or the like. Therefore, the target display effect may be used to highlight that the live streaming interaction event is performed in the second stage, and a nervous and tense atmosphere at which the live streaming interaction event is to be ended may be enhanced, thereby the user experience is improved.

For example, FIG. 4C may be referred to again. In the interface 400C, the electronic device 110 may further increase the display effect 431 and the display effect 432. For example, the display effect 431 and the display effect 432 may include a "breathing light" effect, that is, the specific pattern flickers according to a predetermined rule. Thus, the user 140 may understand the current live streaming interaction event is performed in the second stage through the "breathing light" effect. In some embodiments, the electronic device 110 may also be associated with the display position of the interaction component 210, and the effect element 422 is added to further enhance the atmosphere of live streaming.

Thus, the "finale" may be prompted to encourage the user 140 to actively participate in the interaction to be ended and assist the user in deciding the interaction strategy. Correspondingly, the electronic device 110 may also correspondingly configure the display effect for the "finale stage" to enhance, for example, a nervous and tense atmosphere of live streaming, so that the effect of live streaming may be improved.

### Display Adjustment Based on Topic

In some embodiments, the electronic device 110 may further determine the style of the interaction component 210 based on the theme of the live streaming interaction event. Specifically, a plurality of themes may be preset, for example, a common theme, a theme related to a festival (for example, the Spring Festival, Valentine's Day, etc.), a theme associated with an interaction scenario (for example, a certain game), and a theme determined based on the live streaming content, and the like. For different themes, the electronic device 110 may be configured with different presentation styles, for example, a shape of the interaction component 210, a decoration element included in the interaction component 210, and the like. Generally, the configuration of the presentation style is associated with a theme. For example, in a festival theme, the interaction component 210 may prefer to add an element associated with a particular holiday, e.g., at the Spring Festival, the display style of the interaction component 210 may be added with "lantern". For example, in some collaborative types of themes, the interaction component 210 may configure similar colors (for example, two colors of the same color system but having different shades) for the progress control 220 and the progress control 230 when presenting the progress control 220 and the progress control 230. For example, in some competition types of themes, the interaction component 210 may configure colors with a larger gap (for example, two colors of different color systems) for the progress control 220 and the progress control 230 when presenting the progress control 220 and the progress control 230.

In some embodiments, in accordance with that the display style of the interaction component 210 is configured in advance based on the theme, the display style of the effect element, the connection element, the indicator, and the like subsequently described may also be performed to better present the "theme". For example, in the theme of the Valentine's Day, for the effect element produced by giving the gift, the electronic device 110 may cause the effect of giving the gift to correspond to the theme by presenting an effect of "heart".

Similarly, in the theme, the live streaming content of the live streaming room may also be adjusted, for example, a decoration element is presented in a presentation area of the live streaming room, a background of the live streaming room is replaced, and the like. For example, in the first stage and the second stage of the subsequent description, the electronic device 110 may additionally present the dynamic effect of the corresponding theme in the live streaming room interface, thereby the atmosphere may be enhanced.

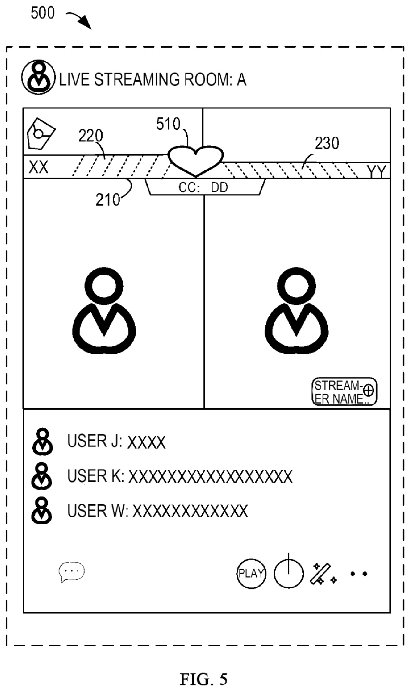

For example, FIG. 5 may be referred to, FIG. 5 illustrates an example interface 500 according to some embodiments of the present disclosure. In the interface 500, for example, under the "theme of the Valentine's Day", the progress control 220 and the progress control 230 in the interaction component 210 may be configured as similar colors and utilized to replace the effect element 252.

Therefore, the presentation style of the interaction component 210 can be adjusted based on the theme, so that it is associated with the theme and the atmosphere of the theme is enhanced, and the impression of the user is improved simultaneously.

### Example Prompt Element

In some embodiments, the electronic device 110 may also present a prompt element in the live streaming interface. The prompt element indicates that a magnitude relationship between the first interaction value and the second interaction value satisfies a predetermined condition. Such predetermined condition may include, for example, an overtaking of the first interaction value for the second interaction value, the first interaction value leading the second interaction value to a certain extent, and so on. Therefore, the user 140 may understand the change situation and the numerical relationship between the first interaction value and the second interaction value based on the prompt element.

In some embodiments, the prompt element indicates an overtaking event that the first interaction value overtakes the second interaction value. For example, the first interaction value lags behind the second interaction value, and the updated first interaction value exceeds the second interaction value due to the gift giving operation of the user 140. In this regard, the electronic device 110 may present a prompt element to prompt when the first interaction value exceeds the second interaction value. Therefore, a case in which the first interaction value exceeds the second interaction value may be fed back to the user 140, so as to motivate the user 140.

In some embodiments, the prompt element indicates identification information of the target user corresponding to the target interaction operation. Specifically, the prompt element may indicate the identification information of the user associated with the overtaking event, for example, when the operation of giving the gift by the user 140 results in the overtaking, the identification information may be, for example, a user avatar and a user name of the user 140, and the like. Thus, the identification information can be utilized to accurately feed back the user associated with the overtaking event and to motivate it. In some embodiments, the prompt element may further indicate a number of times of a set of overtaking events associated with the target user (for example, the user 140), or a total number of times of overtaking caused by the interaction operation. For example, when the user 140 gives a gift for the first time to cause the overtaking, the prompt element may indicate that "the user 140 overtakes once". Correspondingly, when the user 140 subsequently gives the gift again and results in the overtaking, the prompt element may indicate that "the user 140 overtakes twice.

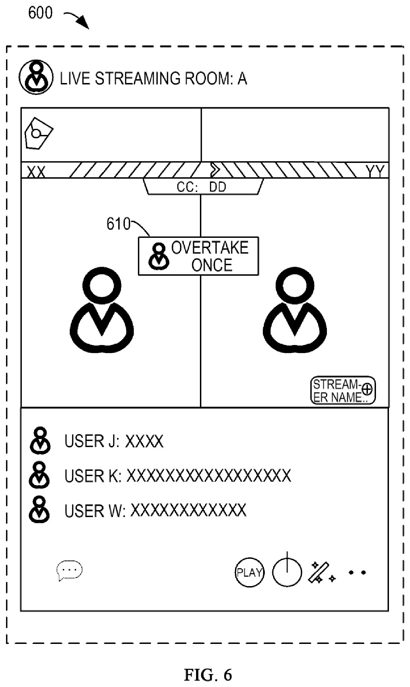

For example, FIG. 6 may be referred to, FIG. 6 shows an example interface 600 according to some embodiments of the present disclosure. The electronic device 110 may present the prompt information 610 as the prompt element to prompt the user 140 when the user 140 gives the gift for the first time to cause the first interaction value to overtake the second interaction value. For example, the prompt information 610 may include representation information (e.g., avatar) of the user 140 and its corresponding "the times of overtaking".

Therefore, corresponding information and effects can be provided through events of interest such as the overtaking, so as to motivate the user while enhancing the atmosphere of live streaming.

### Example Dynamic Effects Of Interaction Operation

In some embodiments, the electronic device 110 may provide an associated dynamic effect for the electronic device 110 according to, for example, an interaction operation of the user 140. For example, when the user 140 gives a gift, an associated effect, such as a "launch effect", may be presented based on the type of the gift. For the gift given by other users in the first live streaming room or the second live streaming room, the electronic device 110 may display, at the first position of the live streaming interface of the user 140, the dynamic effect corresponding to the first interaction operation (which is described as the first dynamic effect for the convenience of description). The first position is determined based on a display position of the live streaming image of the live streaming room in which the first interaction operation occurs, for example, when the other user gives the gift in the first live streaming room, the first position is a preset position in the first live streaming room (for example, a part of the area in the live streaming interface for presenting the content of the first live streaming room). For another example, when the second user gives the gift in the second live streaming room, the first position is a preset position in the second live streaming room (for example, a part of the area in the live streaming interface for presenting the content of the second live streaming room).

Further, for the second interaction operation of the user 140 (for example, a gift giving operation), the electronic device 110 may present a dynamic effect for the user 140 at a second position in the live streaming interface (which is described as a second dynamic effect for convenience of description). The second position is different from the first position, and the second position is a preset position in the live streaming interface. For example, the second position may be a position in the interaction area 213.

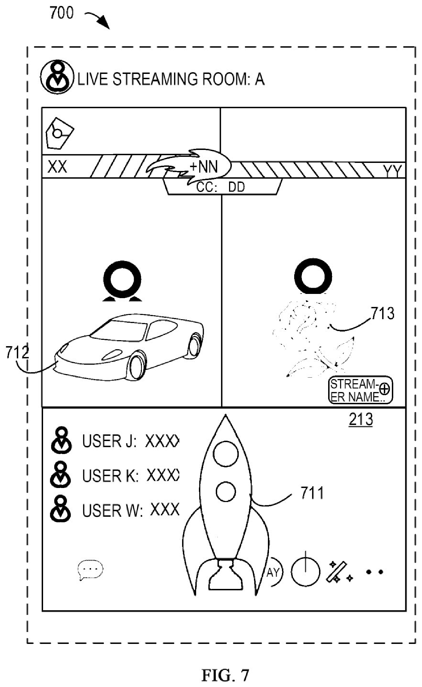

For example, FIG. 7 may be referred to, FIG. 7 illustrates an example interface 700 according to some embodiments of the present disclosure. In the interface 700, for a gift given by the user 140 for the first live streaming room, the electronic device 110 may present the dynamic effect 711 in the interaction area 213. For the gift given by another user, for example, the gift given by another user for the first live streaming room, the electronic device 110 may present the dynamic effect 712 in the area for presenting the content of the first live streaming room in the interface 700. Similarly, for example, the electronic device 110 may present the dynamic effect 713 in the area for presenting the content of the second live streaming room in the interface 700.

In this way, the electronic device 110 can perform effect presentation more prominently and differentially when the current user 140 viewing the live streaming gives a gift, thereby improving the interaction experience thereof.

In some embodiments, in order to facilitate the interaction of the user 140, the electronic device 110 may further add a target control to the live streaming interface. The target control may be used to implement specific types of interactions, such as continuously voting, continuously gift giving, and the like.

In this case, the user 140 can achieve the purpose of continuously voting and continuously gift giving by, for example, continuously clicking the target control. In some embodiments, if the target control is triggered by the user 140, the electronic device 110 may also provide, for example, a manner of adding a dynamic effect to feed back the user 140 to indicate the contribute brought by, for example, "continuously gift giving", "gift giving", etc. For example, such a dynamic effect may be a flashing effect. In some embodiments, such a dynamic effect may also include a plurality of display styles, so that different display styles are used to feed back the different interaction situations. In general, the position that the dynamic effect be added may, for example, be the junction position of the progress control 220 and the progress control 230.

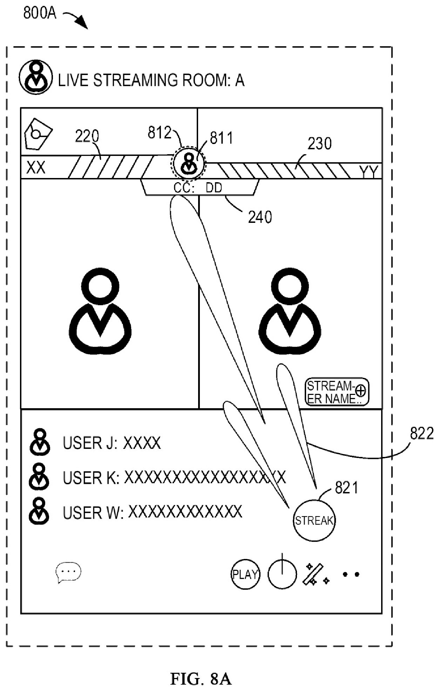

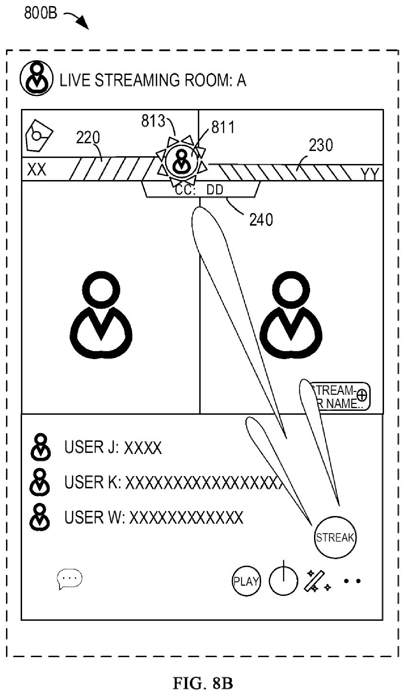

For ease of understanding, FIG. 8A and FIG. 8B may be combined to describe simultaneously. FIG. 8A illustrates an example interface 800A of some embodiments of the present disclosure. FIG. 8B illustrates an example interface 800B of some embodiments of the present disclosure.

In interface 800A, electronic device 110 may further provide a target control 821. In some embodiments, if the electronic device 110 detects a set of trigger operations (e.g., one time, two times continuously, or multiple times continuously) for the target control 821, the electronic device 110 may utilize the interaction component 210 to present the effect element 812 corresponding to the set of trigger operations as a dynamic effect for presentation to indicate the contribution of a set of interaction operations (e.g., continuously gift giving) corresponding to the set of trigger operations for the live streaming interaction event. In some embodiments, the electronic device 110 may also present an image identification (e.g., the avatar of the user 140) of the current user (e.g., the user 140) in a set of dynamic effects (e.g., the effect element 812). For example, in the interface 800A, the electronic device 110 may present the image identification 812 of the user 140 in the effect element 812 (e.g., the display style of the image identification 812 may be determined based on the avatar of the user 140) to indicate that the gift is currently being continuously given by the user 140 based on the target control 821. Thus, the user 140 may intuitively understand that it is currently making the contribution continuously based on the effect element 812. In some embodiments, other users may also view the effect element 812 to understand that a user (e.g., user 140) is giving a gift continuously.

In some embodiments, the presentation occasion of the effect element 812 is determined by the occurrence time of the corresponding trigger operation. For example, when the user 140 clicks the target control 821 each time, the electronic device 110 may correspondingly control the effect element 812 to flicker once. Therefore, the user 140 can understand the number of times of triggering for the target control 821 through the number of times of flickering for the effect element 812. It should be understood that, in such a configuration manner, the number of times of flickering and frequency of the effect element 812 is directly related to the number of times and the frequency that the target control 821 is triggered. Thus, the user 140 can understand its triggering situation for the target control 821 through change situation of the dynamic 812.

In some embodiments, the electronic device 110 may further display a set of connection elements corresponding to a set of trigger operations in the live streaming interface, so as to further indicate that the target control 821 is triggered and the effect can be brought by the target control 821 being triggered. The set of connection elements are used to connect the target control 821 and the target position corresponding to the first live streaming room in the interaction component 210. For example, the target position may also be a position in the corresponding live streaming room, which is within a preset range of the junction position between the progress control 220 and the progress control 230. In some embodiments, the target position may also be added with an indicator to highlight the "target position", and for ease of understanding, the effect element 812 is also exemplified.

For example, FIG. 8A may be referred to. In the interface 800A shown in FIG. 8A, the electronic device 110 may further display a set of connection elements 822 in the live streaming interface, which may be used to connect the target control 821 with the target position (e.g., the position of the effect element 812). When the user 140 triggers the target control 821, the electronic device 110 may present, for example, the effect of launching points to the position of the effect element 812, through a set of connection elements 822. Therefore, by connecting the elements, the effect of the target control 821 when triggered can be further enhanced, and the interaction atmosphere is enhanced.

In some embodiments, in accordance with that the display style of the interaction component 210 is configured in advance based on the scene, the display style of the effect element, the connection element, and the indicator, and the like subsequently described may also be performed to better present the "theme".

In some embodiments, the electronic device 110 may further adjust the display parameter of the indicator corresponding to the target position (which may be described as the second display parameter) based on the trigger frequency of the set of trigger operations. In some embodiments, the second display parameter includes at least one of the following: color, size, and brightness. Thus, the electronic device 110 may change the display style of the indicator by adjusting at least one of the colors, the size and the brightness to reflect different states corresponding to the indicators by using different display styles. For example, the electronic device 110 may also adjust the indicator by adjusting the size and the brightness of the indicator, etc., to feed back the trigger frequency. Taking the effect element 812 as an example, the electronic device 110 may adjust the size and brightness of the effect element 812. It should be understood that, in accordance with that the effect element 812 is used as an indicator at the same time, the user 140 may observe, for example, a change in the trigger frequency by observing the flickering status, the size change, and the brightness change of the effect element 812.

Therefore, the presentation result of the effect can be synchronized with the action of the user 140, thereby enhancing the interaction experience thereof.

Based on the above manner, the embodiments of the present disclosure can adaptively adjust the display style of the interaction component based on the interaction condition in the live streaming room to enhance the interaction atmosphere and improve the interaction effect of the live streaming room.

### Example Process

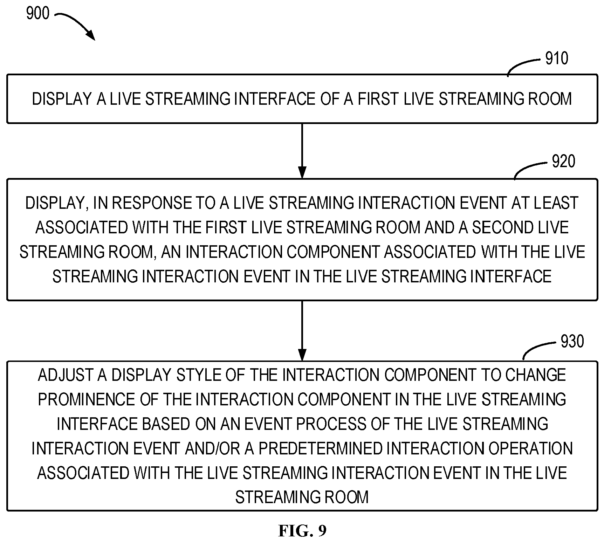

FIG. 9 illustrates a flowchart of an example process 900 of live streaming interaction according to some embodiments of the present disclosure. Process 900 may be implemented at electronic device 110. The process 900 is described below with reference to FIG. 1.

As shown in FIG. 9, in block 910, the electronic device 110 displays a live streaming interface of a first live streaming room.

In block 920, the electronic device 110 displays, in response to a live streaming interaction event at least associated with the first live streaming room and a second live streaming room, an interaction component associated with the live streaming interaction event in the live streaming interface.

In block 930, the electronic device 110 adjusts a display style of the interaction component to change prominence of the interaction component in the live streaming interface based on an event process of the live streaming interaction event and/or a predetermined interaction operation associated with the live streaming interaction event in the live streaming room.

In some embodiments, the interaction component includes a progress control, and adjusting the display style of the interaction component includes: adjusting a first display parameter of at least part of the progress control, the first display parameter including a length of the progress control in a predetermined direction of the live streaming interface, and the predetermined direction being different from a direction indicating progress of the progress control.

In some embodiments, adjusting the display style of the interaction component based on the predetermined interaction operation associated with the live streaming interaction event in the live streaming room includes: adjusting the display style of the interaction component in response to the predetermined interaction operation, such that the adjusted display style lasts for a first duration.

In some embodiments, the process 900 further includes: displaying, in the interaction component, identification information of at least one user associated with the predetermined interaction operation.

In some embodiments, the predetermined interaction operation is associated with a plurality of users, and displaying the identification information of the at least one user associated with the predetermined interaction operation in the interaction component includes: displaying, in the interaction component, identification information of a set of users among the plurality of users, a number of the set of users not exceeding a preset number.

In some embodiments, the process 900 further includes: displaying, in the interaction component, contribution degree information corresponding to the predetermined interaction operation, the contribution degree information indicating a contribution degree of the predetermined interaction operation for the live streaming interaction event.

In some embodiments, the predetermined interaction operation includes at least one of the following: a first type of interaction operation corresponding to an interaction operation for a first time associated with the live streaming interaction event in the first live streaming room or the second live streaming room; a second type of interaction operation corresponding to an interaction operation with a contribution degree for the live streaming interaction event greater than a first threshold in the first live streaming room or the second live streaming room; a third type of interaction operation corresponding to a plurality of interaction operations associated with a same user within a first time period in the first live streaming room or the second live streaming room; a fourth type of interaction operation corresponding to an aggregation of a plurality of interaction operations within a second time period in the first live streaming room or the second live streaming room, a sum of contribution degrees of the plurality of interaction operations for the live streaming interaction event being greater than a second threshold.

In some embodiments, the process 900 further includes: displaying, in association with the interaction component, a dynamic effect corresponding to the predetermined interaction operation.

In some embodiments, adjusting the display style of the interaction component based on the event process of the live streaming interaction event includes: adjusting the display style of the interaction component in response to the live streaming interaction event proceeding to a predetermined event node, such that the adjusted display style lasts for a second duration.

In some embodiments, adjusting the display style of the interaction component based on the event process of the live streaming interaction event includes: adjusting, in response to the live streaming interaction event proceeding to a first stage, the display style of the interaction component until the first stage ends, the first stage indicating that a particular interaction operation within a live streaming room will produce an additional contribution degree for the live streaming interaction event.

In some embodiments, the process 900 further includes: displaying the remaining duration of the first stage in the live streaming interface.

In some embodiments, the process 900 further includes: displaying, in response to a first interaction operation within the first live streaming room or the second live streaming room and by using the interaction component, a preset contribution degree and the additional contribution degree corresponding to the first interaction operation.

In some embodiments, the first interaction operation corresponds to a target live streaming room in the first live streaming room or the second live streaming room, and the process 900 further includes: causing a part in the target live streaming room corresponding to the interaction component to present the dynamic effect, so as to indicate that the first interaction operation occurs in the target live streaming room.

In some embodiments, adjusting the display style of the interaction component based on the event process of the live streaming interaction event includes: adjusting, in response to the live streaming interaction event proceeding to a second stage, the display style of the interaction component until the second stage ends, the second stage indicating that a remaining duration of the live streaming interaction event is less than a threshold.

In some embodiments, the process 900 further includes: reducing, in response to the live streaming interaction event proceeding to the second stage, prominence of at least one interface element adjacent to a position of the interaction component in the display interface.

In some embodiments, the live streaming interface further includes a live streaming area, the live streaming area displays at least a first live streaming image of the first live streaming room and a second live streaming image of the second live streaming room, and the method further includes: applying a target display effect to the live streaming area in response to the live streaming interaction event proceeding to the second stage.

In some embodiments, the process 900 further includes: displaying, in response to the live streaming interaction event proceeding to the second stage, an indicator having a target style in a target part corresponding to the first live streaming room in the interaction component.

In some embodiments, the live streaming interaction event includes: a competitive interaction event indicating that a different live streaming room corresponds to a different interaction target; or a cooperative interaction event indicating that a different live streaming room corresponds to a same interaction target.

In some embodiments, the style of the interaction component is also determined based on the theme of the live streaming interaction event.

In some embodiments, the interaction component displays a first interaction value corresponding to the first live streaming room and a second interaction value corresponding to the second live streaming room, the first interaction value is determined based on a first set of interaction operations within the first live streaming room, the second interaction value is determined based on a second set of interaction operations within the second live streaming room, and the process 900 further includes: presenting a prompt element in the live streaming interface, the prompt element indicating that a magnitude relationship between the first interaction value and the second interaction value satisfies a predetermined condition.

In some embodiments, the prompt element indicates an overtaking event that the first interaction value overtakes the second interaction value.

In some embodiments, the prompt element indicates identification information of a target user corresponding to a target interaction operation, the target interaction operation corresponds to the overtaking event that the first interaction value overtakes the second interaction value.

In some embodiments, the prompt element further indicates a number of a set of overtaking events associated with the target user.

In some embodiments, the live streaming interface is presented by a terminal device of a current user, and the process 900 further includes: displaying, in response to a first interaction operation within the first live streaming room or the second live streaming room, a first dynamic effect corresponding to the first interaction operation at a first position of the live streaming interface, the first interaction operation being associated with an another user different from the current user, the first position being determined based on a display position of a live streaming image of a live streaming room with the first interaction operation occurring; and/or displaying, in response to a second interaction operation of the current user, a second dynamic effect corresponding to the second interaction operation at a second position of the live streaming interface, the second position being different from the first position, the second position being a preset position in the live streaming interface.

In some embodiments, the live streaming interface further includes a target control, and the method further includes: indicating contribution of a set of interaction operations corresponding to a set of trigger operations for the live streaming interaction event by presenting, in response to detecting the set of trigger operations for the target control and by using the interaction component, a set of dynamic effects corresponding to the set of trigger operations.

In some embodiments, a presentation occasion of a respective dynamic effect among the set of dynamic effects is determined by an occurrence moment of a corresponding trigger operation.

In some embodiments, the process 900 further includes: displaying a set of connection elements corresponding to the set of trigger operations in the live streaming interface, the set of connection elements being configured to connect the target control and a target position corresponding to the first live streaming room in the interaction component.

In some embodiments, the process 900 further includes: adjusting a second display parameter of an indicator corresponding to the target position based on a trigger frequency of the set of trigger operations.

In some embodiments, the second display parameter includes at least one of the following: a color, a size, and brightness.

In some embodiments, the set of dynamic effects presents an image identification of the current user.

### Example Apparatus and Device

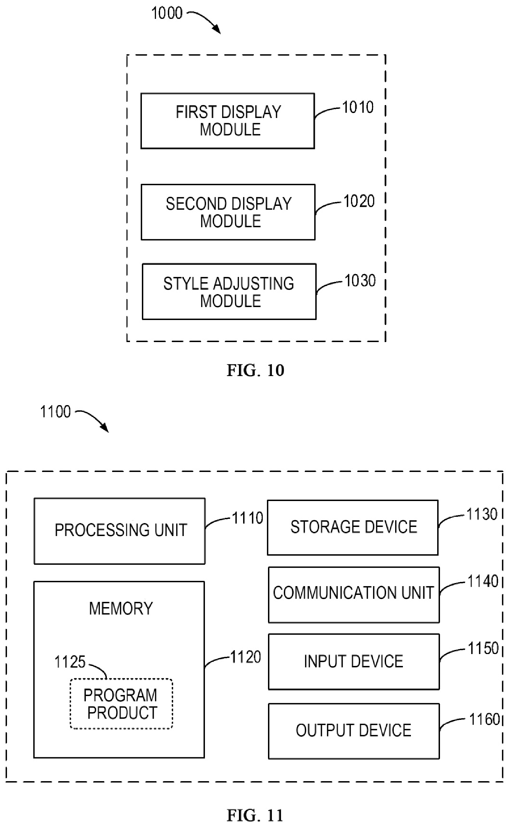

Embodiments of the present disclosure also provide a corresponding apparatus for implementing the above method or process. FIG. 10 shows a schematic structural block diagram of an apparatus 1000 for live streaming interaction according to some embodiments of the present disclosure. The apparatus 1000 may be implemented or included in the electronic device 110. The various modules/components in the apparatus 1000 may be implemented by hardware, software, firmware, or any combination thereof.

The apparatus 1000 includes a first display module 1010 configured to display a live streaming interface of a first live streaming room; a second display module 1020 configured to display, in response to a live streaming interaction event at least associated with the first live streaming room and a second live streaming room, an interaction component associated with the live streaming interaction event in the live streaming interface; and a style adjustment module 1020 configured to adjust a display style of the interaction component to change prominence of the interaction component in the live streaming interface based on an event process of the live streaming interaction event and/or a predetermined interaction operation associated with the live streaming interaction event in the live streaming room.

In some embodiments, the interaction component includes a progress control, and adjusting the display style of the interaction component includes: adjusting a first display parameter of at least part of the progress control, the first display parameter including a length of the progress control in a predetermined direction of the live streaming interface, and the predetermined direction being different from a direction indicating progress of the progress control.

In some embodiments, adjusting the display style of the interaction component based on the predetermined interaction operation associated with the live streaming interaction event in the live streaming room includes: adjusting the display style of the interaction component in response to the predetermined interaction operation, such that the adjusted display style lasts for a first duration.

In some embodiments, the apparatus 1000 further includes an identifier association module configured to display, in the interaction component, identification information of at least one user associated with the predetermined interaction operation.

In some embodiments, the predetermined interaction operation is associated with a plurality of users, and displaying the identification information of the at least one user associated with the predetermined interaction operation in the interaction component includes: displaying, in the interaction component, identification information of a set of users among the plurality of users, a number of the set of users not exceeding a preset number.

In some embodiments, the apparatus 1000 further includes: a first contribution display module configured to display, in the interaction component, contribution degree information corresponding to the predetermined interaction operation, the contribution degree information indicating a contribution degree of the predetermined interaction operation for the live streaming interaction event.

In some embodiments, the predetermined interaction operation includes at least one of the following: a first type of interaction operation corresponding to an interaction operation for a first time associated with the live streaming interaction event in the first live streaming room or the second live streaming room; a second type of interaction operation corresponding to an interaction operation with a contribution degree for the live streaming interaction event greater than a first threshold in the first live streaming room or the second live streaming room; a third type of interaction operation corresponding to a plurality of interaction operations associated with a same user within a first time period in the first live streaming room or the second live streaming room; a fourth type of interaction operation corresponding to an aggregation of a plurality of interaction operations within a second time period in the first live streaming room or the second live streaming room, a sum of contribution degrees of the plurality of interaction operations for the live streaming interaction event being greater than a second threshold.

In some embodiments, the apparatus 1000 further includes: a first effect displaying module configured to display, in association with the interaction component, a dynamic effect corresponding to the predetermined interaction operation.

In some embodiments, adjusting the display style of the interaction component based on the event process of the live streaming interaction event includes: adjusting the display style of the interaction component in response to the live streaming interaction event proceeding to a predetermined event node, such that the adjusted display style lasts for a second duration.

In some embodiments, adjusting the display style of the interaction component based on the event process of the live streaming interaction event includes: adjusting, in response to the live streaming interaction event proceeding to a first stage, the display style of the interaction component until the first stage ends, the first stage indicating that a particular interaction operation within a live streaming room will produce an additional contribution degree for the live streaming interaction event.

In some embodiments, the apparatus 1000 further includes: a duration displaying module configured to display the remaining duration of the first stage in the live streaming interface.

In some embodiments, the apparatus 1000 further includes: a second contribution displaying module configured to display, in response to a first interaction operation within the first live streaming room or the second live streaming room and by using the interaction component, a preset contribution degree and the additional contribution degree corresponding to the first interaction operation.

In some embodiments, the first interaction operation corresponds to a target live streaming room in the first live streaming room or the second live streaming room, and the apparatus 1000 further includes: a second effect displaying module configured to cause a part in the target live streaming room corresponding to the interaction component to present the dynamic effect, so as to indicate that the first interaction operation occurs in the target live streaming room.

In some embodiments, adjusting the display style of the interaction component based on the event process of the live streaming interaction event includes: adjusting, in response to the live streaming interaction event proceeding to a second stage, the display style of the interaction component until the second stage ends, the second stage indicating that a remaining duration of the live streaming interaction event is less than a threshold.

In some embodiments, the apparatus 1000 further includes: a prominence adjustment module configured to reduce, in response to the live streaming interaction event proceeding to the second stage, prominence of at least one interface element adjacent to a position of the interaction component in the display interface.

In some embodiments, the live streaming interface further includes a live streaming area, the live streaming area displays at least a first live streaming image of the first live streaming room and a second live streaming image of the second live streaming room, and the apparatus 1000 further includes: an effect application module configured to apply a target display effect to the live streaming area in response to the live streaming interaction event proceeding to the second stage.

In some embodiments, the apparatus 1000 further includes: an indicator displaying module configured to display, in response to the live streaming interaction event proceeding to the second stage, an indicator having a target style in a target part in the first live streaming room corresponding to the interaction component.

In some embodiments, the live streaming interaction event includes: a competitive interaction event indicating that a different live streaming room corresponds to a different interaction target; or a cooperative interaction event indicating that a different live streaming room corresponds to a same interaction target.

In some embodiments, the style of the interaction component is further determined based on the theme of the live streaming interaction event.

In some embodiments, the interaction component displays a first interaction value corresponding to the first live streaming room and a second interaction value corresponding to the second live streaming room, the first interaction value is determined based on a first set of interaction operations within the first live streaming room, the second interaction value is determined based on a second set of interaction operations within the second live streaming room, and the apparatus 1000 further includes: a prompt presentation module configured to present a prompt element in the live streaming interface, the prompt element indicating that a magnitude relationship between the first interaction value and the second interaction value satisfies a predetermined condition.

In some embodiments, the prompt element indicates an overtaking event that the first interaction value overtakes the second interaction value.

In some embodiments, the prompt element indicates identification information of a target user corresponding to a target interaction operation, the target interaction operation corresponds to the overtaking event that the first interaction value overtakes the second interaction value.

In some embodiments, the prompt element further indicates a number of a set of overtaking events associated with the target user.

In some embodiments, the live streaming interface is presented by a terminal device of a current user, and the method further includes: displaying, in response to a first interaction operation within the first live streaming room or the second live streaming room, a first dynamic effect corresponding to the first interaction operation at a first position of the live streaming interface, the first interaction operation being associated with an another user different from the current user, the first position being determined based on a display position of a live streaming image of a live streaming room with the first interaction operation occurring; and/or displaying, in response to a second interaction operation of the current user, a second dynamic effect corresponding to the second interaction operation at a second position of the live streaming interface, the second position being different from the first position, the second position being a preset position in the live streaming interface.

In some embodiments, the live streaming interface further includes a target control, and the apparatus 1010 further includes: an effect presentation module configured to indicate contribution of a set of interaction operations corresponding to a set of trigger operations for the live streaming interaction event by presenting, in response to detecting the set of trigger operations for the target control and by using the interaction component, a set of dynamic effects corresponding to the set of trigger operations.

In some embodiments, a presentation occasion of a respective dynamic effect among the set of dynamic effects is determined by an occurrence moment of a corresponding trigger operation.

In some embodiments, the apparatus 1000 further includes: a connection element displaying module configured to display a set of connection elements corresponding to the set of trigger operations in the live streaming interface, the set of connection elements being configured to connect the target control and a target position corresponding to the first live streaming room in the interaction component.

In some embodiments, the apparatus 1000 further includes an indicator adjustment module configured to adjusting a second display parameter of an indicator corresponding to the target position based on a trigger frequency of the set of trigger operations.

In some embodiments, the second display parameter includes at least one of the following: a color, a size, and brightness.

In some embodiments, the set of dynamic effects presents an image identification of the current user.

FIG. 11 illustrates a block diagram of an electronic device 1100 in which one or more embodiments of the present disclosure may be implemented. It should be understood that the electronic device 1100 illustrated in FIG. 11 is merely illustrative and should not constitute any limitation on the functionality and scope of the embodiments described herein. The electronic device 1100 shown in FIG. 11 may be configured to implement the electronic device 110 in FIG. 1.

As shown in FIG. 11, the electronic device 1100 is in the form of a general-purpose electronic device. Components of the electronic device 1100 may include, but are not limited to, one or more processors or processing units 1110, a memory 1120, a storage device 1130, one or more communication units 1140, one or more input devices 1150, and one or more output devices 1160. The processing unit 1110 may be an actual or virtual processor and capable of performing various processes according to programs stored in the memory 1120. In multiprocessor systems, multiple processing units execute computer-executable instructions in parallel to improve parallel processing capabilities of electronic device 1100.

Electronic device 1100 typically includes a plurality of computer storage media. Such media may be any available media accessible to the electronic device 1100, including, but not limited to, volatile and non-volatile media, removable and non-removable media. The memory 1120 may be volatile memory (e.g., registers, caches, random access memory (RAM)), non-volatile memory (e.g., read-only memory (ROM), electrically erasable programmable read-only memory (EEPROM), flash memory), or some combination thereof. Storage device 1130 may be a removable or non-removable medium and may include a machine-readable medium, such as a flash drive, magnetic disk, or any other medium, which may be capable of storing information and/or data and may be accessed within electronic device 1100.

The electronic device 1100 may further include additional removable/non-removable, volatile/non-volatile storage media. Although not shown in FIG. 11, a disk drive for reading or writing from a removable, nonvolatile magnetic disk (e.g., a "floppy disk") and an optical disk drive for reading or writing from a removable, nonvolatile optical disk may be provided. In these cases, each drive may be connected to a bus (not shown) by one or more data media interfaces. The memory 1120 may include a computer program product 1125 having one or more program modules configured to perform various methods or actions of various embodiments of the present disclosure.

The communication unit 1140 is configured to communicate with another electronic device through a communication medium. Additionally, the functionality of components of the electronic device 1100 may be implemented in a single computing cluster or multiple computing machines capable of communicating over a communication connection. Thus, the electronic device 1100 may operate in a networked environment using logical connections with one or more other servers, network personal computers (PC), or another network node.

The input device 1150 may be one or more input devices such as a mouse, a keyboard, a trackball, or the like. The output device 1160 may be one or more output devices, such as a display, a speaker, a printer, or the like. The electronic device 1100 may also communicate with one or more external devices (not shown) through the communication unit 1140 as needed, external devices such as storage devices, display devices, etc., communicate with one or more devices that enable a user to interact with the electronic device 1100, or communicate with any device (e.g., a network card, a modem, etc.) that enables the electronic device 1100 to communicate with one or more other electronic devices. Such communication may be performed via an input/output (I/O) interface (not shown).

According to example implementations of the present disclosure, there is provided a computer-readable storage medium having computer-executable instructions stored thereon, wherein the computer-executable instructions are executed by a processor to implement the method described above. According to example implementations of the present disclosure, a computer program product is further provided, the computer program product being tangibly stored on a non-transitory computer-readable medium and including computer-executable instructions, the computer-executable instructions being executed by a processor to implement the method described above.

Aspects of the present disclosure are described herein with reference to flowcharts and/or block diagrams of methods, apparatuses, devices, and computer program products implemented in accordance with the present disclosure. It should be understood that each block of the flowchart and/or block diagram, and combinations of blocks in the flowcharts and/or block diagrams, may be implemented by computer readable program instructions.

These computer-readable program instructions may be provided to a processing unit of a general purpose computer, special purpose computer, or other programmable data processing apparatus to produce a machine, such that the instructions, when executed by a processing unit of a computer or other programmable data processing apparatus, produce means to implement the functions/acts specified in the flowchart and/or block diagram. These computer-readable program instructions may also be stored in a computer-readable storage medium that cause the computer, programmable data processing apparatus, and/or other devices to function in a particular manner, such that the computer-readable medium storing instructions includes an article of manufacture including instructions to implement aspects of the functions/acts specified in the one and more blocks of the flowchart and/or block diagram(s).

The computer-readable program instructions may be loaded onto a computer, other programmable data processing apparatus, or other apparatus, such that a series of operational steps are performed on a computer, other programmable data processing apparatus, or other apparatus to produce a computer-implemented process such that the instructions executed on a computer, other programmable data processing apparatus, or other apparatus implement the functions/acts specified in the one and more blocks in the flowchart and/or block diagram(s).

The flowchart and block diagrams in the figures show architecture, functionality, and operation of possible implementations of systems, methods, and computer program products according to various implementations of the present disclosure. In this regard, each block in the flowchart or block diagram may represent a module, program segment, or portion of an instruction that includes one or more executable instructions for implementing the specified logical function. In some alternative implementations, the functions noted in the blocks may also occur in a different order than noted in the figures. For example, two consecutive blocks may actually be performed substantially in parallel, which may sometimes be performed in the reverse order, depending on the functionality involved. It is also noted that each block in the block diagrams and/or flowchart, as well as combinations of blocks in the block diagrams and/or flowchart, may be implemented with a dedicated hardware-based system that performs the specified functions or actions, or may be implemented in a combination of dedicated hardware and computer instructions.

Various implementations of the present disclosure have been described above, which are illustrative, not exhaustive, and are not limited to the implementations disclosed. Many modifications and variations will be apparent to those of ordinary skill in the art without departing from the scope and spirit of the various implementations illustrated. The selection of the terms used herein is intended to best explain the principles of the implementations, practical applications, or improvements to techniques in the marketplace, or to enable others of ordinary skill in the art to understand the various implementations disclosed herein.

## Claims

1. A method for live streaming interaction, comprising:
displaying a live streaming interface of a first live streaming room;
displaying, in response to a live streaming interaction event at least associated with the first live streaming room and a second live streaming room, an interaction component associated with the live streaming interaction event in the live streaming interface; and
adjusting a display style of the interaction component to change prominence of the interaction component in the live streaming interface based on an event process of the live streaming interaction event and/or a predetermined interaction operation associated with the live streaming interaction event in the live streaming room.

2. The method of claim 1, wherein the interaction component comprises a progress control, and adjusting the display style of the interaction component comprises:
adjusting a first display parameter of at least part of the progress control, the first display parameter comprising a length of the progress control in a predetermined direction of the live streaming interface, and the predetermined direction being different from a direction indicating progress of the progress control.

3. The method of claim 1, wherein adjusting the display style of the interaction component based on the predetermined interaction operation associated with the live streaming interaction event in the live streaming room comprises:
adjusting the display style of the interaction component in response to the predetermined interaction operation, such that the adjusted display style lasts for a first duration.

4. The method of claim 1, wherein the predetermined interaction operation is associated with a plurality of users, and the method comprises:
displaying, in the interaction component, identification information of a set of users among the plurality of users, a number of the set of users not exceeding a preset number.

5. The method of claim 1, further comprising:
displaying, in the interaction component, contribution degree information corresponding to the predetermined interaction operation, the contribution degree information indicating a contribution degree of the predetermined interaction operation for the live streaming interaction event.

6. The method of claim 1, wherein the predetermined interaction operation comprises at least one of the following:
a first type of interaction operation corresponding to an interaction operation for a first time associated with the live streaming interaction event in the first live streaming room or the second live streaming room;
a second type of interaction operation corresponding to an interaction operation with a contribution degree for the live streaming interaction event greater than a first threshold in the first live streaming room or the second live streaming room;
a third type of interaction operation corresponding to a plurality of interaction operations associated with a same user within a first time period in the first live streaming room or the second live streaming room; or
a fourth type of interaction operation corresponding to an aggregation of a plurality of interaction operations within a second time period in the first live streaming room or the second live streaming room, a sum of contribution degrees of the plurality of interaction operations for the live streaming interaction event being greater than a second threshold.

7. The method of claim 1, wherein adjusting the display style of the interaction component based on the event process of the live streaming interaction event comprises:
adjusting the display style of the interaction component in response to the live streaming interaction event proceeding to a predetermined event node, such that the adjusted display style lasts for a second duration.

8. The method of claim 1, wherein adjusting the display style of the interaction component based on the event process of the live streaming interaction event comprises:
adjusting, in response to the live streaming interaction event proceeding to a first stage, the display style of the interaction component until the first stage ends, the first stage indicating that a particular interaction operation within a live streaming room will produce an additional contribution degree for the live streaming interaction event.

9. The method of claim 8, further comprising:
displaying, in response to a first interaction operation within the first live streaming room or the second live streaming room and by using the interaction component, a preset contribution degree and the additional contribution degree corresponding to the first interaction operation.

10. The method of claim 1, wherein adjusting the display style of the interaction component based on the event process of the live streaming interaction event comprises:
adjusting, in response to the live streaming interaction event proceeding to a second stage, the display style of the interaction component until the second stage ends, the second stage indicating that a remaining duration of the live streaming interaction event is less than a threshold.

11. The method of claim 10, further comprising:
reducing, in response to the live streaming interaction event proceeding to the second stage, prominence of at least one interface element adjacent to a position of the interaction component in the display interface.

12. The method of claim 10, wherein the live streaming interface further comprises a live streaming area, the live streaming area displays at least a first live streaming image of the first live streaming room and a second live streaming image of the second live streaming room, and the method further comprises:
applying a target display effect to the live streaming area in response to the live streaming interaction event proceeding to the second stage.

13. The method of claim 1, wherein the live streaming interaction event comprises:
a competitive interaction event indicating that a different live streaming room corresponds to a different interaction target; or
a cooperative interaction event indicating that a different live streaming room corresponds to a same interaction target.

14. The method of claim 1, wherein the interaction component displays a first interaction value corresponding to the first live streaming room and a second interaction value corresponding to the second live streaming room, the first interaction value is determined based on a first set of interaction operations within the first live streaming room, the second interaction value is determined based on a second set of interaction operations within the second live streaming room, and the method further comprises:
presenting a prompt element in the live streaming interface, the prompt element indicating that a magnitude relationship between the first interaction value and the second interaction value satisfies a predetermined condition.

15. The method of claim 14, wherein the prompt element indicates an overtaking event that the first interaction value overtakes the second interaction value.

16. The method of claim 15, wherein the prompt element indicates identification information of a target user corresponding to a target interaction operation, the target interaction operation corresponds to the overtaking event that the first interaction value overtakes the second interaction value.

17. The method of claim 16, wherein the prompt element further indicates a number of a set of overtaking events associated with the target user.

18. The method of claim 1, wherein the live streaming interface is presented by a terminal device of a current user, and the method further comprises:
displaying, in response to a first interaction operation within the first live streaming room or the second live streaming room, a first dynamic effect corresponding to the first interaction operation at a first position of the live streaming interface, the first interaction operation being associated with an another user different from the current user, the first position being determined based on a display position of a live streaming image of a live streaming room with the first interaction operation occurring; and/or
displaying, in response to a second interaction operation of the current user, a second dynamic effect corresponding to the second interaction operation at a second position of the live streaming interface, the second position being different from the first position, the second position being a preset position in the live streaming interface.

19. The method of claim 1, wherein the live streaming interface further comprises a target control, and the method further comprises:
indicating contribution of a set of interaction operations corresponding to a set of trigger operations for the live streaming interaction event by presenting, in response to detecting the set of trigger operations for the target control and by using the interaction component, a set of dynamic effects corresponding to the set of trigger operations, wherein a presentation occasion of a respective dynamic effect among the set of dynamic effects is determined by an occurrence moment of a corresponding trigger operation.

20. The method of claim 19, further comprising:
displaying a set of connection elements corresponding to the set of trigger operations in the live streaming interface, the set of connection elements being configured to connect the target control and a target position corresponding to the first live streaming room in the interaction component.

21. The method of claim 20, further comprising:
adjusting a second display parameter of an indicator corresponding to the target position based on a trigger frequency of the set of trigger operations, the second display parameter comprising at least one of the following: a color, a size, and brightness.

22. An apparatus for live streaming interaction, comprising:
a first display module configured to display a live streaming interface of a first live streaming room;
a second display module configured to display, in response to a live streaming interaction event at least associated with the first live streaming room and a second live streaming room, an interaction component associated with the live streaming interaction event in the live streaming interface; and
a style adjusting module configured to adjust a display style of the interaction component to change prominence of the interaction component in the live streaming interface based on an event process of the live streaming interaction event and/or a predetermined interaction operation associated with the live streaming interaction event in the live streaming room.

23. An electronic device comprises:
at least one processing unit; and
at least one memory coupled to the at least one processing unit and storing instructions for execution by the at least one processing unit, the instructions, when executed by the at least one processing unit, causing the electronic device to perform the method of any of claims 1 to 21.

24. A computer-readable storage medium having a computer program stored thereon, the computer program being executable by a processor to implement the method of any of claims 1 to 21.
